# EUROPEAN PATENT APPLICATION

(11) **EP 2 320 639 A1**
(43) Date of publication of application: **11.05.2011**
(21) Application number: 10157907.6
(22) Date of filing: 26.03.2010
(51) Int. Cl.: H04N 5/21, G06T 5/00

(54) **Display apparatus to enhance image quality through repeated processing and image processing method thereof**

(30) Priority: 20.10.2009 KR 20090099871
(71) Applicant: Samsung Electronics Co., Ltd., Gyeonggi-do 442-742 (KR)
(72) Inventor: Jeon, Seung-ryong, Hwaseong-si Gyeonggi-do (KR); Chun, Kang-wook, Yongin-si Gyeonggi-do (KR); Jung, You-young, Suwon-si Gyeonggi-do (KR)
(74) Representative: Fearnside, Andrew Simon

(57) **Abstract**

A display apparatus capable of repeating an image quality enhancement process for an input image for a number of times to enhance image quality of the input image, and an image processing method thereof are provided. Accordingly, since the display apparatus repeats the image quality enhancement process for a single image frame, the display apparatus may enhance the image quality with high performance using a small memory capacity.

## Description

### CROSS-REFERENCE TO RELATED APPLICATIONS

This application claims priority from Korean Patent Application No. 10-2009-0099871, filed on October 20, 2009 in the Korean Intellectual Property Office, the disclosure of which is incorporated herein by reference in its entirety.

### BACKGROUND

### 1. Field

Embodiments relate to a display apparatus and an image processing method thereof, and more particularly, aspects relate to a display apparatus to process an image for enhancement of image quality, and an image processing method thereof.

### 2. Description of the Related Art

The quality of an image signal input to a display apparatus may vary according the kind of the image and a transmission path and may include noise. Accordingly, display apparatuses need to enhance the quality of an input image signal. Due to development of technology for processing an image signal, display apparatuses may enhance image quality in diverse methods.

In order to enhance quality of a specific frame image, display apparatuses have to refer to quality of previous frame images. The more previous frame images used, the more an enhanced image quality may be obtained. However, as the number of used previous frame images increases, memory of the display apparatuses requires more storage space. Therefore, in order to obtain high image quality enhancement, the display apparatuses have to have memory of a large storage capacity, so manufacturing cost may be increased.

Users want display apparatuses capable of displaying high quality images with lower cost. Therefore, there is a need for an image processing method to use less memory and have a high enhancement of image quality.

### SUMMARY

According to the present invention there is provided an apparatus and method as set forth in the appended claims. Other features of the invention will be apparent from the dependent claims, and the description which follows.

Exemplary embodiments address at least the above problems and/or disadvantages and other disadvantages not described above. Also, the exemplary embodiments are not required to overcome the disadvantages described above, and an exemplary embodiment may not overcome any of the problems described above.

An exemplary embodiment provides a display apparatus capable of repeating an image quality enhancement process for an input image for a number of times to enhance image quality of the input image, and an image processing method thereof.

According to an exemplary aspect, there is provided a display apparatus including an image quality enhancement unit which processes an input image signal to enhance image quality of an input image, and a control unit which controls the image quality enhancement unit to repeat an image quality enhancement process for the input image signal for a number of times.

The control unit may set the number of repetition of the image quality enhancement process for the input image signal according to one or more characteristics of the input image.

The image quality enhancement unit may include a noise reducer which reduces noise of the input image signal, and a clarity enhancer which enhances the clarity of the input image signal.

The control unit may control at least one of the noise reducer and the clarity enhancer to process the input image signal according to one or more characteristics of the input image.

The control unit may set image quality enhancement processing conditions according to characteristics of the input image.

The control unit may reset the image quality enhancement processing conditions when the image quality enhancement process for the input image signal is repeated.

The exemplary display apparatus may further include an image analysis unit which analyzes characteristics of the input image and outputs information on one or more characteristics of the input image to the control unit.

The image analysis unit may analyze temporal characteristics, spatial characteristics, or both, of the input image.

According to another exemplary aspect, there is provided an image processing method including receiving an image, repeating an image quality enhancement process for an input image signal for a number of times to enhance image quality of the input image, and outputting the processed image.

The exemplary method may further include setting a number of repetitions of the image quality enhancement process for the input image signal according to one or more characteristics of the input image.

The exemplary image quality enhancement process may include reducing noise of the input image signal, and enhancing the clarity of the input image signal.

In the exemplary image quality enhancement process, the input image signal may be processed by at least one of reducing the noise and enhancing the clarity, according to characteristics of the input image.

The exemplary method may further include setting image quality enhancement processing conditions according to characteristics of the input image.

In the setting of the image quality enhancement processing conditions, the image quality enhancement processing conditions may be reset when the image quality enhancement process for the input image signal is repeated

The exemplary method may further include analyzing one or more characteristics of the input image and outputting information on the characteristics of the input image.

In the outputting of the information on the characteristics of the input image, temporal characteristics, spatial characteristics, or both, of the input image may be analyzed.

### BRIEF DESCRIPTION OF THE DRAWINGS

The above and/or other aspects of exemplary embodiments may be more apparent by describing certain exemplary embodiments with reference to the accompanying drawings, in which:

FIG. 1 is a detailed block diagram of a TV according to an exemplary embodiment;

FIG. 2 is a detailed block diagram of an A/V processing unit according to an exemplary embodiment; and

FIG. 3 is a flow chart of an image processing method according to an exemplary embodiment.

### DETAILED DESCRIPTION

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding. However, aspects of exemplary embodiments may be practiced without those specifically defined matters. Also, well-known functions or constructions may not be described in detail since they may obscure with unnecessary detail.

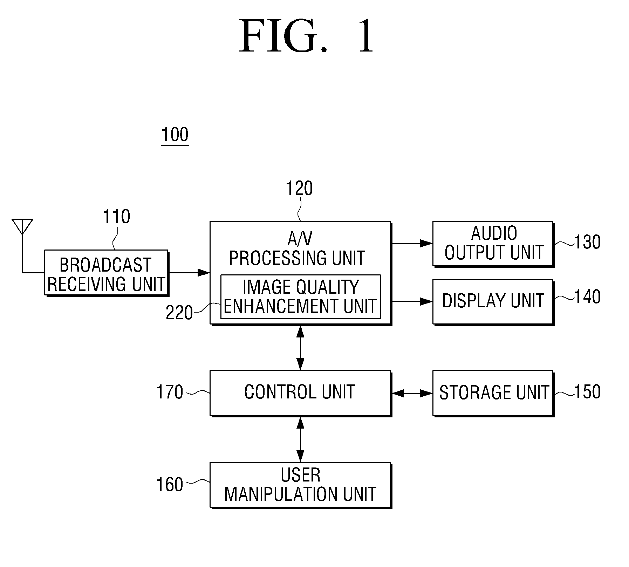

FIG. 1 is a detailed block diagram of a television (TV) 100 according to an exemplary embodiment.

As illustrated in FIG. 1, the TV 100 may include a broadcast receiving unit 110, an audio/image (A/V) processing unit 120, an audio output unit 130, a display unit 140, a storage unit 150, a user manipulation unit 160, and a control unit 170.

The broadcast receiving unit 110 receives an analog or digital broadcast wirelessly or via a cable and demodulates a received broadcast.

The A/V processing unit 120 performs processing, such as image decoding, image scaling, audio decoding, image quality enhancement, of an image signal and an audio signal output from the broadcast receiving unit 110. The A/V processing unit 120 outputs the processed image signal to the display unit 140 and outputs the processed audio signal to the audio output unit 130.

If the received image signal and the received audio signal are stored in the storage unit 150, the A/V processing unit 120 may store the image and the audio in the storage unit 150 in a compressed format.

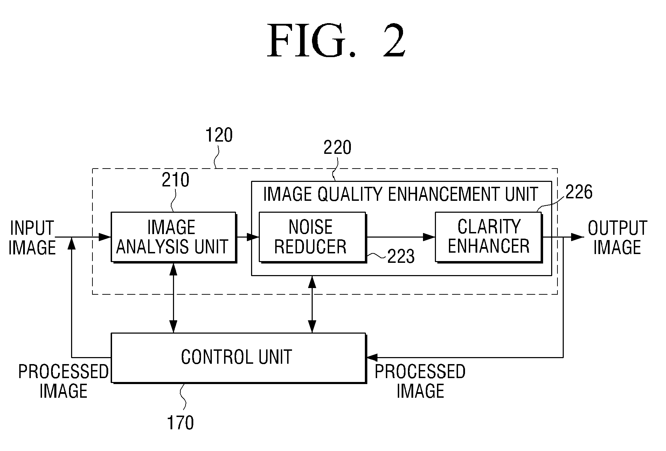

More specifically, the A/V processing unit 120 may include an image quality enhancement unit 220. The image quality enhancement unit 220 performs an image quality enhancement process for the input image signal repeatedly to reduce noise and enhance the clarity of the image in the image input signal. Detailed configuration and operation of the image quality enhancement unit 220 is described below with reference to FIG. 2.

The audio output unit 130 outputs audio output from the A/V processing unit 120 through a speaker, or outputs the audio to an audio output terminal which is connected to an external speaker or other audio device such as headphones or an audio receiver unit.

The display unit 140 displays an image having enhanced image quality output from the A/V processing unit 120.

The storage unit 150 may record and store a broadcast program image received from the broadcast receiving unit 110. The storage unit 150 may be implemented as a hard disk, non-volatile memory, optical storage unit, networked storage, or the like.

The user manipulation unit 160 receives a user's manipulation and transmits the user's manipulation to the control unit 170. The user manipulation unit 160 may include buttons provided on the TV 100, a touch screen, a remote control, commands transmitted over a network or a link from other A/V related components, etc.

The control unit 170 understands a user's command based on the user's manipulation transmitted from the user manipulation unit 160 and controls the overall operation of the TV 100 according to the user's command. More specifically, the control unit 170 controls the image quality enhancement unit 220 to repeat the image quality enhancement process for an input image signal for a number of times.

Detailed operation of the control unit 170 is described with reference to FIG. 2.

FIG. 2 is a detailed block diagram of the A/V processing unit 120 according to an exemplary embodiment. As illustrated in FIG. 2, the A/V processing unit 120 may include an image analysis unit 210 and an image quality enhancement unit 220.

The image analysis unit 210 analyzes one or more characteristics of an input image, and outputs the information on the characteristics of the input image to the control unit 170. Subsequently, the control unit 170 sets image quality enhancement processing conditions using this information.

The characteristics of the input image indicate characteristics of image data that may measure image quality or noise of the input image. The characteristics of the input image may include characteristics of each frame of the input image, and may include characteristics formed by a plurality of frames. Characteristics of a single frame may indicate spatial characteristics such as a characteristic regarding an edge of an image, a texture characteristic, a plane characteristic, a clarity characteristic, and/or a noise characteristic. Characteristics formed by a plurality of frames may indicate temporal characteristics such as a characteristic regarding motion of or in an image.

As described above, the image analysis unit 210 may analyze at least one of temporal and spatial characteristics of an input image.

The image quality enhancement unit 220 processes an input image signal to enhance image quality of an input image. The image quality enhancement unit 220 performs an image quality enhancement process according to the image quality enhancement processing conditions set by the control unit 170. The image quality enhancement processing conditions indicate parameter values which are applied to an algorithm for image quality enhancement processing. The image quality enhancement processing conditions are set by the control unit 170.

For example, the control unit 170 may set an image quality enhancement processing condition based on the information on the analyzed characteristics of the image to reduce noise, if noise is large. In addition, the control unit 170 may set an image quality enhancement processing condition based on the information on the analyzed characteristics of the image to enhance the clarity of the input image, if the clarity of the input image is low.

As illustrated in FIG. 2, the image quality enhancement unit 220 may include a noise reducer 223 and a clarity enhancer 226.

The noise reducer 223 may reduce noise of the input image signal according to the image quality enhancement processing condition. The noise reducer 223 may reduce noise if a noise value of the input image is higher than a predetermined threshold value, and the noise reducer 223 may not reduce noise if the noise value of the input image is lower than the threshold value.

The clarity enhancer 226 enhances the clarity of the input image signal according the image quality enhancement processing condition. The clarity enhancer 226 may enhance the clarity if a clarity value of the input image is lower than a predetermined threshold value, and the clarity enhancer 226 may not enhance the clarity if the clarity value of the input image is higher than the threshold value.

As described above, the image quality enhancement unit 220 performs the image quality enhancement process according to the image quality enhancement processing conditions set by the control unit 170.

The control unit 170 controls the image quality enhancement unit 220 to repeat the image quality enhancement process for an input image for a number of times. More specifically, the control unit 170 retransmits the image signal processed by the image quality enhancement unit 220 to the image analysis unit 210 for a number of times. Subsequently, the image quality enhancement unit 220 performs the image quality enhancement process for the previously-processed image signal again.

Since the control unit 170 controls the image quality enhancement process for a single frame of the input image to be repeated for a number of times, the image quality enhancement performance may be enhanced.

In addition, the control unit 170 sets the number of repetition of the image quality enhancement process for the input image signal according to the characteristics of the input image input from the image analysis unit 210. More specifically, the control unit 170 may set the number of repetition to be higher when the noise value of the input image is higher and the clarity value of the input image is lower.

The control unit 170 controls at least one of the noise reducer 223 and the clarity enhancer 226 to process the input image according to the characteristics of the input image. More specifically, according to the characteristics of the input image, the control unit 170 may control only the noise reducer 223 to process the input image signal, control only the clarity enhancer 226 to process the input image signal, or control both the noise reducer 223 and the clarity enhancer 226 to process the input image.

Furthermore, when the image quality enhancement process for the input image signal is repeated, the control unit 170 may set the image quality enhancement processing conditions again. That is, when the image quality enhancement process for the input image signal is repeated, the control unit 170 may newly set the image quality enhancement processing conditions. Therefore, the control unit 170 may reset the image quality enhancement processing conditions to be suitable for the previously-processed input image so that image quality enhancement processing can be performed. Accordingly, the image quality enhancement process for the image input image may be performed a number of times to reach predetermined characteristics, such as a predetermined noise and/or clarity characteristic.

As described above, the control unit 170 may control the image quality enhancement process for a single frame image to be repeated, so the TV 100 can improve the image quality enhancement performance without increasing memory capacity.

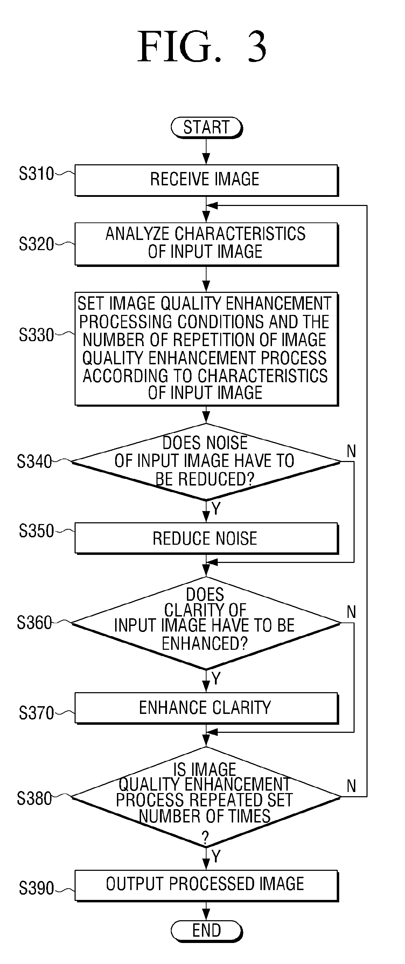

Hereinafter, an image processing method to improve image quality of the TV 100 is described in detail with reference to FIG. 3, which is a flow chart of an exemplary image processing method.

The TV 100 receives an image signal (S310). More specifically, the TV 100 receives an image signal through the broadcast receiving unit 110, and may also receive an image signal through diverse image interfaces such as a camera, a cable transmission, a wired or wireless network, or attached storage, for example.

Subsequently, the TV 100 analyzes one or more characteristics of the input image and generates the information on the characteristics of the input image (S320).

The characteristics of the input image indicate characteristics of image data that may measure image quality or noise of the input image. The characteristics of the input image may include characteristics of each frame of the input image, and may include characteristics formed by a plurality of frames. Characteristics of a single frame may indicate spatial characteristics such as a characteristic regarding an edge of an image, a texture characteristic, a plane characteristic, a clarity characteristic, and a noise characteristic. Characteristics formed by a plurality of frames may indicate temporal characteristics such as a characteristic regarding motion of or in an image.

The TV 100 sets image quality enhancement processing conditions and the number of repetition of the image quality enhancement process for the input image based on the generated information on the characteristics of the input image (S330).

The image quality enhancement processing conditions indicate parameter values which are applied to an algorithm for image quality enhancement processing. The image quality enhancement processing conditions are set by the control unit 170 of the TV 100. For example, the TV 100 may set an image quality enhancement processing condition to reduce noise if noise of the image is large. In addition, the TV 100 may set an image quality enhancement processing condition to enhance the clarity of the input image if the clarity of the input image is low.

Furthermore, the TV 100 sets the number of repetition of the image quality enhancement process for the input image signal according to the characteristics of the input image. More specifically, the TV 100 may set the number of repetition to be higher when the noise value of the input image is higher and the clarity value of the input image is lower.

Accordingly, the TV 100 processes the input image signal according to the set image quality enhancement processing conditions and the set number of repetition of the image quality enhancement process for the input image.

The TV 100 determines whether or not noise of the input image is to be reduced based on the set image quality enhancement processing conditions (S340). More specifically, the TV 100 may reduce noise if a noise value of the input image is higher than a predetermined threshold value, and the TV 100 may not reduce noise if the noise value of the input image is lower than the threshold value.

Therefore, if noise of the input image is to be reduced (S340-Y), the TV 100 reduces the noise of the input image (S350).

Furthermore, the TV 100 determines whether or not the clarity of the input image is to be enhanced based on the set image quality enhancement processing conditions (S360). More specifically, the TV 100 may enhance the clarity if a clarity value of the input image is lower than a predetermined threshold value, and the TV 100 may not enhance the clarity if the clarity value of the input image is higher than the threshold value.

Therefore, if the clarity of the input image is to be enhanced (S360-Y), the TV 100 enhances the clarity of the input image (S370).

Subsequently, the TV 100 determines whether or not the image quality enhancement process for the input image is performed the set number of times (S380). If the image quality enhancement process for the input image is not performed the set number of times (S380-N), the TV 100 repeats operations S320 to S380 to repeatedly perform the image quality enhancement process for the input image. More specifically, the TV 100 inputs the image signal processed by the image quality enhancement unit 220 to the image analysis unit 210 again for a number of times. The image quality enhancement unit 220 performs the image quality enhancement process for the previously-processed image signal again. Following this process, the TV 100 can repeatedly perform the image quality enhancement process for the input image.

In addition, when the image quality enhancement process for the input image signal is repeated, the TV 100 repeats operations S320 and S330, so the image quality enhancement processing conditions can be set repeatedly. That is, when the TV 100 may repeat the image quality enhancement process for the input image signal, the image quality enhancement processing conditions may be newly set. Accordingly, the TV 100 performs the image quality enhancement processing of the input image by setting the image quality enhancement processing conditions to be suitable for the previously-processed image again.

If the image quality enhancement process for the input image is performed the set number of times (S380-Y), the TV 100 outputs the enhanced image (S390). Alternatively, the image quality enhancement process for the image input image may be performed a number of times to reach predetermined characteristics, such as a predetermined noise and/or clarity characteristic.

As described above, the TV 100 may repeat the image quality enhancement process for an input single frame image. As a result, the TV 100 may improve the image quality enhancement performance without increasing memory capacity.

In these exemplary embodiments, the display apparatus is a TV, and the display apparatus may also be any kind of display capable of processing image quality enhancement, such as monitors, portable multimedia players, electronic picture frames, mobile phones, MP3 players, notebook computers, netbook computers, electronic book readers, indoor or outdoor large format displays, etc.

As can be appreciated from the above description, an exemplary display apparatus capable of repeating the image quality enhancement process for an input image for a number of times to enhance image quality of the input image, and an exemplary image processing method thereof are provided. Accordingly, since the display apparatus may repeat the image quality enhancement process for a single image frame, the display apparatus may enhance the image quality with high performance using a small memory capacity.

The foregoing exemplary embodiments are merely exemplary and are not to be construed as limiting, and the present teaching can be readily applied to other types of apparatuses. Also, the description of the exemplary embodiments is intended to be illustrative, and not to limit the scope of the claims, and many alternatives, modifications, and variations will be apparent to those skilled in the art. Additionally, expressions such as "at least one of", when preceding a list of elements, modify the entire list of elements and do not modify each element of the list.

## Claims

1. A display apparatus, comprising:
an image quality enhancement unit which processes an input image signal to enhance image quality of an input image of the input image signal; and
a control unit which controls the image quality enhancement unit to repeat an image quality enhancement process for the input image signal for a number of repetitions.

2. The display apparatus according to claim 1, wherein the control unit sets the number of repetitions of the image quality enhancement process for the input image signal according to characteristics of the input image.

3. The display apparatus according to claim 1 or claim 2, wherein the image quality enhancement unit comprises:
a noise reducer which reduces noise of the input image signal; and
a clarity enhancer which enhances clarity of the input image signal.

4. The display apparatus according to claim 3, wherein the control unit controls at least one of the noise reducer and the clarity enhancer to process the input image signal according to characteristics of the input image.

5. The display apparatus according to any one of claims 1 to 4, wherein the control unit sets image quality enhancement processing conditions according to characteristics of the input image.

6. The display apparatus according to claim 5, wherein the control unit resets the image quality enhancement processing conditions when the image quality enhancement process for the input image signal is repeated.

7. The display apparatus according to any one of claims 1 to 6, further comprising:
an image analysis unit which analyzes characteristics of the input image and outputs information on characteristics of the input image to the control unit.

8. The display apparatus according to claim 7, wherein the image analysis unit analyzes at least one of temporal characteristics and spatial characteristics of the input image.

9. An image processing method, comprising:
receiving an image signal;
repeating an image quality enhancement process for the received image signal for a number of repetitions to enhance image quality of an input image of the received image signal; and
outputting the processed image signal.

10. The method according to claim 9, further comprising:
setting the number of repetitions of the image quality enhancement process for the received image signal according to characteristics of the input image.

11. The method according to claim 9 or claim 10, wherein the image quality enhancement process comprises:
reducing noise of the received image signal; and
enhancing clarity of the received image signal.

12. The method according to claim 11, wherein in the image quality enhancement process, the received image signal is processed by at least one of reducing the noise and enhancing the clarity, according to characteristics of the input image.

13. The method according to any one of claims 9 to 12, further comprising:
setting image quality enhancement processing conditions according to characteristics of the input image.

14. The method according to claim 13, wherein in the setting of the image quality enhancement processing conditions, the image quality enhancement processing conditions are reset when the image quality enhancement process for the received image signal is repeated.

15. The method according to any one of claims 9 to 14, further comprising:
analyzing characteristics of the input image and outputting information on characteristics of the input image.

## Amended claims

### Amended claims in accordance with Rule 137(2) EPC.

**1.** A display apparatus, comprising:
an image quality enhancement unit (220) which is arranged to process an input image signal to enhance image quality of an input image of the input image signal; and
a control unit (170) which is arranged to control the image quality enhancement unit to repeat an image quality enhancement process for the input image signal for a number of repetitions, **characterised in that**:
the control unit is arranged to set the number of repetitions of the image quality enhancement process for the input image signal according to characteristics of the input image.

**2.** The display apparatus according to claim 1, wherein the image quality enhancement unit comprises:
a noise reducer (223) which reduces noise of the input image signal;
and
a clarity enhancer (226) which enhances clarity of the input image signal.

**3.** The display apparatus according to claim 2, wherein the control unit is arranged to control either: only the noise reducer; or only the clarity enhancer; or both the noise reducer and the clarity enhancer, to process the input image signal according to characteristics of the input image.

**4.** The display apparatus according to any one of claims 1 to 3, wherein the control unit is arranged to set image quality enhancement processing conditions according to characteristics of the input image.

**5.** The display apparatus according to claim 4, wherein the control unit is arranged to reset the image quality enhancement processing conditions when the image quality enhancement process for the input image signal is repeated.

**6.** The display apparatus according to any one of claims 1 to 5, further comprising:
an image analysis unit (210) arranged to analyze characteristics of the input image and outputs information on characteristics of the input image to the control unit.

**7.** The display apparatus according to claim 6, wherein the image analysis unit is arranged to analyze at least one of temporal characteristics and spatial characteristics of the input image.

**8.** An image processing method, comprising:
receiving an image signal (S310);
repeating an image quality enhancement process (S380) for the received image signal for a number of repetitions to enhance image quality of an input image of the received image signal; and
outputting the processed image signal (S390) **characterised by**:..
setting the number of repetitions of the image quality enhancement process for the received image signal according to characteristics of the input image.

**9.** The method according to claim 8, wherein the image quality enhancement process comprises:
reducing noise of the received image signal (S350); and enhancing clarity of the received image signal (S370),

**10.** The method according to claim 9, wherein in the image quality enhancement process, the received image signal is processed by either: only reducing the noise; or only enhancing the clarity; or both reducing the noise and enhancing the clarity, according to characteristics of the input image.

**11.** The method according to any one of claims 8 to 10, further comprising:
setting image quality enhancement processing conditions according to characteristics of the input image.

**12.** The method according to claim 11, wherein in the setting of the image quality enhancement processing conditions, the image quality enhancement processing conditions are reset when the image quality enhancement process for the received image signal is repeated.

**13.** The method according to any one of claims 8 to 12, further comprising:
analyzing characteristics of the input image and outputting information on characteristics of the input image.
